# FASCICULE DE BREVET EUROPEEN

(11) **EP 4 365 455 B1**
(45) Date de publication et mention de la délivrance du brevet: **18.02.2026**
(21) Numéro de dépôt: 23204743.1
(22) Date de dépôt: 19.10.2023
(51) Int. Cl.: F16B 45/02

(54) **MOUSQUETON VERROUILLABLE POUR L'ALPINISME ET LES TRAVAUX EN HAUTEUR ET PROCÉDÉ D'OUVERTURE D'UN TEL MOUSQUETON**
VERRIEGELBARER KARABINERHAKEN FÜR BERGSTEIGER UND HÖHENARBEITEN UND VERFAHREN ZUM ÖFFNEN EINES SOLCHEN KARABINERS
LOCKABLE CARABINER FOR MOUNTAINEERING AND WORKS AT HEIGHT AND METHOD FOR OPENING SUCH CARABINER

(30) Priorité: 06.11.2022 FR 2211525
(43) Date de publication de la demande: 08.05.2024
(73) Titulaire: Zedel, 38920 Crolles (FR)
(72) Inventeur: PLAZE, Pierre, 73800 CHIGNIN (FR); VERTU, Landry, 73470 FILLIERE (FR)
(74) Mandataire: Talbot, Alexandre

(56) Documents cités:
- US-A1- 2014 110 956
- US-B2- 8 572 819
- US-B2- 8 955 203

## Description

### Domaine technique

L'invention est relative à un mousqueton verrouillable pour l'alpinisme et les travaux en hauteur et à un procédé d'ouverture d'un tel mousqueton.

### Technique antérieure

Il est connu des mousquetons qui possèdent un corps et un doigt monté mobile par rapport au corps entre une position d'ouverture et une position de fermeture. Dans la position d'ouverture, il est possible d'introduire un organe dans le crochet formé par le corps, par exemple une corde. Dans la position de fermeture, il n'est pas possible d'introduire un organe dans le crochet formé par le corps, ni de l'extraire hors du mousqueton.

Il est intéressant d'éviter l'ouverture non-intentionnelle du mousqueton en associant un moyen de blocage du doigt. Différentes configurations de moyens de blocage ont été utilisées qui permettent d'empêcher l'ouverture du doigt tant que les moyens de blocage sont dans une position de blocage.

Il est connu de réaliser des mousquetons dont le doigt définit une cavité borgne recevant un ressort qui sollicite le doigt vers une position de fermeture. Le trou formé dans le doigt a un effet sur la résistance mécanique de sorte que pour atteindre des performances mécaniques importantes, il est nécessaire de former un doigt épais. Le trou formé dans le doigt a également pour effet de conserver les poussières, l'humidité et la boue ce qui est préjudiciable à une bonne durée de vie du mousqueton. Il est donc intéressant de rechercher une autre configuration de mousqueton.

La demanderesse commercialise des mousquetons munis d'un doigt pivotant et d'un système de verrouillage. Le doigt est formé par une plaque métallique en « U » associé à un ressort en torsion qui sollicite le doigt vers la position de fermeture. Le ressort en torsion prend appui d'une part sur le corps et d'autre part sur le doigt. Le mousqueton est muni d'un système de blocage avec un verrou montée pivotante par rapport au corps. Une configuration sensiblement identique est commercialisée sous la dénomination EASHOOK. Selon l'environnement d'utilisation, la durée de vie du ressort peut fortement varier car ce dernier se trouve en contact des poussières et boues.

Le document US 2014/0230199 divulgue un mousqueton-crochet pour les travaux en hauteur. Le mousqueton est muni d'un doigt pivotant et d'un verrou pivotant. Le doigt et le verrou sont fixés sur un corps sous la forme d'un « C ». Le corps définit un crochet. Lorsque le verrou est dans la position de blocage, le verrou empêche le pivotement du doigt ce qui empêche l'actionnement du doigt. Le verrou est sollicité dans la position de blocage au moyen d'un ressort hélicoïdal en compression qui est en appui sur le corps et sur le verrou. Le doigt est sollicité dans la position de fermeture par un ressort en torsion qui est en appui sur le corps et sur le doigt.

Une telle configuration rend difficile la réalisation d'un mousqueton compact et apte à résister à des efforts importants. En effet, le corps doit résister aux efforts selon le grand axe du crochet et selon le petit axe du crochet. Il est également nécessaire de conformer le corps pour supporter les efforts appliqués par les ressorts. Pour supporter tous les efforts appliqués sur le corps, il est nécessaire de former un corps épais. Une telle configuration n'est pas pratique à utiliser car le mousqueton est épais. Le mousqueton est compliqué à réaliser ce qui augmente le coût de fabrication et rend le mousqueton sensible aux défaillances des multiples composants.

Un autre mousqueton est connu du document US 8 572 819 B2.

### Objet de l'invention

Un objet de l'invention consiste à prévoir un mousqueton qui présente un meilleur compromis entre la compacité et la durée de vie du mousqueton en comparaison des configurations de l'art antérieur.

Selon un aspect de l'invention, le mousqueton selon la revendication 1 comporte :
- un corps en forme de « C » muni d'une première portion d'extrémité et d'une deuxième portion d'extrémité reliées par une portion centrale ;
- un doigt ayant une première extrémité et une deuxième extrémité, la première extrémité du doigt étant fixée à la première extrémité du corps, le doigt étant monté à pivotement entre une position de fermeture et une position d'ouverture, la deuxième extrémité du doigt se déplaçant par rapport à la deuxième extrémité du corps lorsque le doigt se déplace entre la position d'ouverture et la position de fermeture, le doigt et le corps définissant un anneau lorsque le doigt est dans la position de fermeture ;
- un verrou fixé au corps et monté mobile entre une position de blocage et une position de déblocage, la position de blocage bloquant le doigt dans la position de fermeture, la position de déblocage autorisant un déplacement du doigt entre la position de fermeture et la position d'ouverture ;
- un premier ressort et un deuxième ressort ayant chacun une première extrémité reliée au doigt et une deuxième extrémité reliée au verrou, le premier ressort et le deuxième ressort sollicitant chacun le doigt pour qu'une position de repos du doigt soit la position de fermeture et sollicitant le verrou pour qu'une position de repos du verrou soit la position de blocage, le premier ressort et le deuxième ressort étant dépourvus de point de fixation direct avec le corps.

Le premier ressort et le deuxième ressort sont séparés par le corps.

De manière avantageuse, le premier ressort et le deuxième ressort possèdent la même longueur et la même raideur.

Dans une configuration particulière, le doigt possède une première aile et une deuxième aile, le corps étant disposé entre la première aile et la deuxième aile dans la position d'ouverture et dans la position de fermeture.

Dans un développement avantageux, la première aile et la deuxième aile du doigt présentent une surface de recouvrement avec le corps qui est plus importante dans la position d'ouverture que dans la position de fermeture, la surface de recouvrement étant observée selon une direction parallèle à l'axe de pivotement du doigt.

Préférentiellement, la première aile et la deuxième aile glissent contre le corps.

Selon un mode de réalisation, le verrou se présente sous la forme d'un « U » comportant deux ailes reliées par une paroi de liaison, le verrou et le corps définissant une cavité recevant le premier ressort et le deuxième ressort.

Dans un développement avantageux, la première aile du doigt est disposée entre le corps et la première aile du verrou. La deuxième aile du doigt est disposée entre le corps et la deuxième aile du verrou.

Préférentiellement, la cavité recevant le premier ressort et le deuxième ressort est délimitée par la première aile et la deuxième aile du doigt, la première aile du verrou glissant contre la première aile du doigt et la deuxième aile du verrou glissant contre la deuxième aile du doigt.

Dans un autre développement avantageux, dans la position de déblocage, la paroi de liaison est en appui contre le corps.

Dans un développement avantageux, le doigt est monté à pivotement autour d'un premier axe de pivotement et la première extrémité du premier ressort est terminée par une tête montée à pivotement autour d'un axe de pivotement qui est parallèle au premier axe de pivotement.

Préférentiellement, le premier ressort est un ressort hélicoïdal à spires non jointives. Quelques spires de la première extrémité sont bloquées par la tête pour empêcher une flexion desdites quelques spires.

Dans un mode de réalisation particulier, dans la position d'ouverture, la tête est contre une butée de fin de course définie par le corps.

Avantageusement, le corps définit une lumière et la tête s'étend de part et d'autre du corps à travers la lumière pour recevoir la première extrémité du premier ressort et la première extrémité du deuxième ressort.

De manière préférentielle, le doigt est monté à pivotement par rapport au corps autour d'un premier arbre de pivotement et le verrou est monté à pivotement par rapport au corps autour du deuxième arbre de pivotement. La première extrémité prend appui sur le doigt à une première distance du premier arbre de pivotement et la deuxième extrémité prend appui sur le verrou à une deuxième distance du deuxième arbre de pivotement, la deuxième distance étant inférieure à la première distance. Un axe reliant le premier arbre de pivotement et le deuxième arbre de pivotement est disposé intégralement d'un seul côté d'un plan passant par le premier ressort et le deuxième ressort.

**Il** est également avantageux de prévoir que le doigt définit une glissière, la glissière étant montée à pivotement par rapport au corps lorsque le doigt se déplace entre la position de fermeture et la position d'ouverture. Le verrou possède une tige, la tige étant montée mobile par rapport au corps et par rapport à la glissière lorsque le verrou se déplace entre la position de blocage et la position de déblocage, la glissière étant disposée du même côté de la portion centrale que la deuxième extrémité du doigt dans une observation selon une direction parallèle à l'axe de pivotement du doigt.

L'invention a également pour objet un procédé d'ouverture d'un mousqueton qui soit facile à mettre en œuvre.

On tend à atteindre ce résultat au moyen d'un procédé, selon la revendication 16, comportant les étapes suivantes :
- fournir un mousqueton selon l'une quelconque des configurations précédentes ;
- déplacer le verrou de la position de blocage à la position de déblocage ;
- déplacer le doigt de la position de fermeture à la position d'ouverture.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1 illustre schématiquement une vue de côté d'un mousqueton dont le doigt est dans la position de fermeture et dont le verrou est dans la position de blocage ;
- la figure 2 illustre schématiquement une vue en coupe transversale d'un mousqueton dans le plan BB ;
- la figure 3 illustre schématiquement une vue de coupe longitudinale du mousqueton dont le doigt est dans la position de fermeture et dont le verrou est dans la position de blocage ;
- la figure 4 illustre schématiquement une vue de coupe longitudinale du mousqueton dont le doigt est dans la position de fermeture et dont le verrou est dans la position de déblocage ;
- la figure 5 illustre schématiquement une vue de coupe longitudinale du mousqueton dont le doigt est dans une position d'ouverture et dont le verrou est dans la position de déblocage ;
- la figure 6 illustre schématiquement une vue de coupe longitudinale du mousqueton dont le doigt est dans une position d'ouverture et dont le verrou est dans la position de déblocage ;
- la figure 7 illustre schématiquement une vue éclatée du mousqueton.

### Description des modes de réalisation

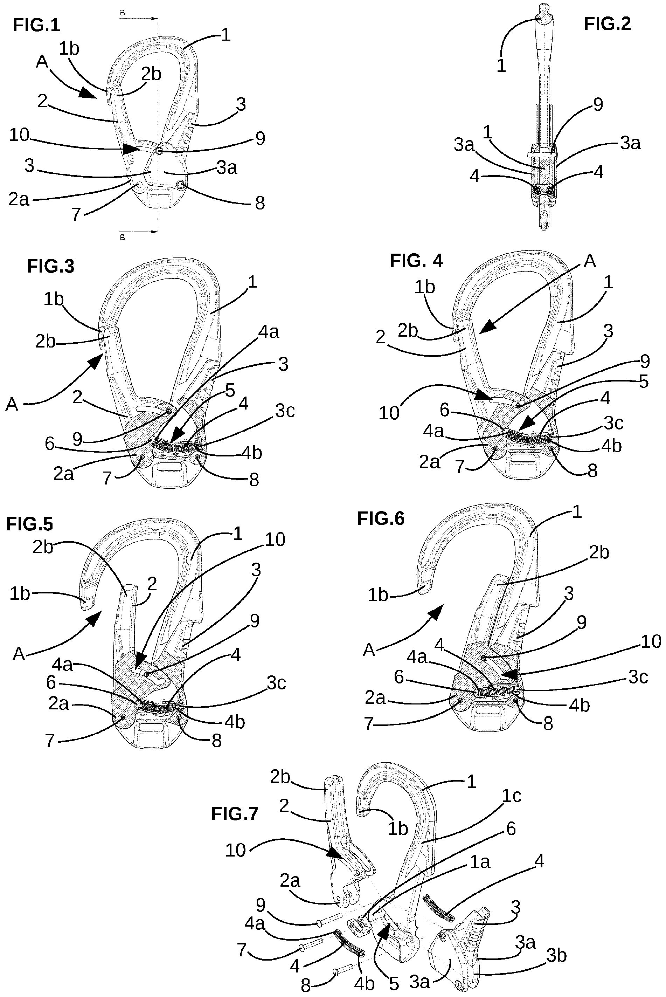

Les figures 1 à 7 illustrent différents modes de réalisation d'un mousqueton pour l'alpinisme et les travaux en hauteur. Le mousqueton possède un corps 1 et un doigt 2 fixé au corps 1. Le corps 1 est en forme de « C » et est muni d'une première portion d'extrémité 1a et d'une deuxième portion d'extrémité 1b reliées par une portion centrale 1c. Le doigt 2 possède une première extrémité 2a et une deuxième extrémité 2b. La première extrémité 2a du doigt 2 est fixée à la première extrémité 1a du corps 1.

Le doigt 2 est monté mobile entre une position de fermeture et une position d'ouverture. De préférence, le doigt 2 est monté à pivotement. La deuxième extrémité 2b du doigt 2 se déplace par rapport à la deuxième extrémité 1b du corps 1 lorsque le doigt 2 se déplace entre la position d'ouverture et la position de fermeture. Il est particulièrement avantageux que le doigt 2 se déplace vers la portion centrale 1c lorsque le doigt 2 se déplace depuis la position de fermeture jusqu'à la position d'ouverture. En d'autres termes, le doigt 2 se déplace vers le creux du crochet depuis la position de fermeture vers la position d'ouverture. Cette configuration est plus avantageuse que celle où le doigt 2 se déplace vers l'extérieur. Cela permet également de fournir plus facilement un mousqueton avec une ouverture de doigt 2 plus importante sans trop augmenter l'encombrement du mousqueton et d'avoir une bonne résistance.

Dans la position d'ouverture illustrée aux figures 5 et 6, le corps 1 et le doigt 2 définissent une fente A. La fente A est délimitée d'une part par la deuxième extrémité 1b du corps 1 et par le doigt 2. Dans la position de fermeture, le doigt 2 ferme la fente A pour définir un anneau avec le corps 1. De manière préférentielle, dans la position de fermeture, les deux extrémités du doigt 2 sont en contact avec les deux extrémités du corps 1. Ce mode de réalisation est avantageux car il permet de former un mousqueton qui tient bien dans la position fermée en limitant l'encombrement du doigt 2. Dans la position de fermeture, le mousqueton définit un anneau qui peut être de forme quelconque. La position de fermeture est illustrée aux figures 1, 3 et 4. La position d'ouverture est illustrée aux figures 5 et 6. Dans la position d'ouverture, le corps 1 définit un crochet.

Le mousqueton possède un verrou 3 qui est fixé au corps 1 et qui est monté mobile entre une position de blocage et une position de déblocage. Le verrou 3 est lié fonctionnellement au doigt 2. Dans la position de blocage, le verrou 3 bloque le doigt 2 dans la position de fermeture. Dans la position de déblocage, le verrou 3 autorise un déplacement du doigt 2 entre la position de fermeture et la position d'ouverture. Le verrou 3 est distinct du doigt 2. Le verrou 3 peut être monté mobile en pivotement ou en translation par rapport au corps 1. La position de blocage est illustrée aux figures 1 et 3. La position de déblocage est illustrée aux figures 4 à 6. A titre d'exemple, la position d'ouverture du doigt 2 impose au verrou 3 de se trouver dans la position de déblocage.

Le mousqueton possède un premier ressort 4 qui est muni d'une première extrémité 4a reliée fonctionnellement au doigt 2 et une deuxième extrémité 4b reliée fonctionnellement au verrou 3. Le premier ressort 4 est de préférence un ressort en compression, plus préférentiellement un ressort hélicoïdal en compression. Le mousqueton possède un premier ressort 4 et un deuxième ressort 4 qui sont chacun munis d'une première extrémité 4a reliée fonctionnellement au doigt 2 et une deuxième extrémité 4b reliée fonctionnellement au verrou 3. Les deux ressorts peuvent être des ressorts hélicoïdaux en compression.

Dans une position de repos, le premier ressort 4 ou chaque ressort 4 sollicite le doigt 2 vers la position de fermeture et sollicite le verrou 3 vers la position de blocage. Dans un mode de réalisation préférentiel, le premier ressort 4 ou chaque ressort 4 est dépourvu de point de fixation direct avec le corps 1. En d'autres termes, le premier ressort 4 ou chaque ressort 4 est totalement mobile par rapport au corps 1. Cela permet de former un mousqueton plus compact car il n'est pas besoin de configurer une partie du corps 1 pour supporter les efforts du premier ressort 4 ou de chaque ressort 4. Le premier ressort 4 ou chaque ressort 4 est monté mobile par rapport au corps 1 afin de pouvoir se déformer entre ses deux extrémités sans point de fixation avec le corps 1.

La sollicitation du verrou 3 pour déplacer le verrou 3 de la position de blocage jusqu'à la position de déblocage correspond à l'application d'un effort sur le verrou 3 et donc à l'application d'un effort sur le premier ressort 4 ou chaque ressort 4. De préférence, l'effort est un effort en compression du premier ressort 4. L'effort appliqué par le verrou 3 sur le premier ressort 4 ou chaque ressort 4 se traduit par à un effort appliqué sur le doigt 2 pour le maintenir dans la position de fermeture. L'effort appliqué sur le doigt 2 pour le déplacer de la position de fermeture jusqu'à la position d'ouverture se traduit par l'application d'un effort supplémentaire sur le verrou 3 pour déplacer le verrou 3 vers la position de blocage. De préférence, l'effort est un effort en compression du premier ressort 4 ou chaque ressort 4. L'effort appliqué sur le doigt 2 pour passer de la position de fermeture à la position d'ouverture est de sens contraire à l'effort appliqué sur le verrou 3 pour passer de la position de blocage à la position de déblocage.

Le premier ressort 4 ou chaque ressort 4 est fixé fonctionnellement d'une part au doigt 2 et d'autre part du verrou 3 ce qui permet d'utiliser un même ressort pour les deux opérations consécutives nécessaires à l'ouverture du doigt 2.

La figure 3 illustre un mousqueton avec un verrou 3 dans la position de blocage et un doigt 2 dans la position de fermeture. La figure 4 illustre un mousqueton avec un verrou dans la position de déblocage et un doigt 2 dans la position de fermeture. L'effort appliqué sur le verrou 3 déforme le premier ressort 4 ou chaque ressort 4. L'effort appliqué sur le verrou 3 se traduit par un effort plus important appliqué par le premier ressort 4 ou chaque ressort 4 sur le doigt 2 pour le maintenir dans la position de fermeture. La figure 5 illustre un mousqueton avec un verrou dans la position de déblocage et un doigt 2 ayant quitté la position de fermeture et se dirigeant vers une position d'ouverture totale.

Des efforts sont appliqués aux deux extrémités opposées du premier ressort 4 pour le contraindre en compression. La figure 6 illustre un mousqueton avec un verrou dans la position de déblocage et un doigt 2 ayant quitté la position de fermeture pour atteindre une position d'ouverture totale. Des efforts sont appliqués aux deux extrémités opposées du premier ressort 4 pour le contraindre en compression.

Afin de réaliser un mousqueton qui présente un meilleur rapport entre la résistance mécanique et la compacité, il est avantageux d'avoir un corps 1 qui est en position centrale par rapport aux points de fixation du doigt 2. En d'autres termes, le corps 1 est installé entre deux parois latérales du doigt 2. Le doigt 2 possède une zone en forme de « U » qui reçoit une partie du corps 1 pour réaliser la fixation du doigt 2 sur le corps 1. Cette configuration est avantageuse par rapport à un corps possédant deux flasques opposés entre lesquels se trouve le doigt.

Préférentiellement, le doigt 2 est muni d'une première aile 2c et d'une deuxième aile 2c qui sont disposées de part et d'autre du corps 1 afin d'augmenter la tenue mécanique du doigt 2 et notamment durant toute la phase de déplacement du doigt 2. La première aile 2c et la deuxième aile 2c sont en vis-à-vis du corps 1 lorsque le doigt 2 est dans la position de fermeture et dans la position d'ouverture. Il est intéressant que les ailes soient continument en vis-à-vis du corps 2 entre la position d'ouverture et la position de fermeture ce qui permet de limiter le déplacement du doigt 1 par rapport au corps 1 selon une direction qui est parallèle à l'axe de pivotement du doigt 2.

Préférentiellement, dans la position de fermeture, le corps 1 et le doigt 2 muni de ses deux ailes définissent un trou traversant. Le trou traversant permet à de la boue ou des poussières de passer à travers le trou traversant. Cela permet de limiter la conservation de la boue et des poussières à l'intérieur du mousqueton tout au long du déplacement du doigt. En comparaison, le document US 2014/0230199 divulgue un mousqueton avec deux mousquetons indépendants dont la défaillance de l'un entraine la défaillance de l'ensemble du mousqueton. Le ressort en torsion est disposé pour collecter l'intégralité des poussières et boues qui glissent le long du corps 1. Lorsque qu'un élément étranger s'insère à l'intérieur du corps depuis le tour délimité entre le doigt et le corps, il n'est quasiment plus possible de l'extraire. Les poussières et les boues sont coincées à l'intérieur du corps ce qui peut détériorer rapidement le fonctionnement des ressorts. Ces problématiques n'existent pas dans le domaine du levage car les mousquetons travaillent majoritairement le crochet dirigé vers le bas.

De manière préférentielle, le verrou 3 possède une première aile 3a et une deuxième aile 3a qui sont reliées par une paroi de liaison 3b. Le verrou 3 se présente sous la forme d'un « U » et le corps 1 est disposé entre la première aile 3a et la deuxième aile 3a. Le premier ressort 4 est disposé entre le corps 1 et la première aile 3a. Le corps 1 et la première aile 3a définissent une cavité qui reçoit le premier ressort 4. La première aile 3a glisse sur le corps 1 ou est disposée très proche de la face latérale du corps 1 ce qui permet de limiter l'introduction de boue ou de poussière à proximité immédiate du premier ressort 4. Lorsque le mousqueton possède un premier ressort 4 et un deuxième ressort 4, les deux ressorts sont séparés par le corps 1. Il est préférable que le verrou 3 soit en forme de « U ». La première aile 3a, la deuxième aile 3a et le corps 1 définissent au moins une cavité, par exemple une cavité ou deux cavités qui reçoivent le ou les ressorts. Une seule cavité, par exemple délimitée en forme de « C », peut recevoir deux ressorts 4.

Dans un mode de réalisation particulier, le doigt 2 possède deux ailes 2c qui recouvrent le corps 1 et le verrou 3 possède deux ailes 3a qui recouvrent le corps 1. De manière privilégiée, la première aile 2c du doigt 2 est disposée entre le corps 1 et la première aile 3a du verrou 3. Avantageusement, la deuxième aile 2c du doigt 2 est disposée entre le corps 1 et la deuxième aile 3a du verrou 3. Dans une configuration préférentielle, la cavité qui reçoit le premier ressort 4 est délimitée par le corps 1, la première aile 2c du doigt 2 et la première aile 3a du verrou 3. La première aile 3a du verrou 3 peut être montée glissante contre une face de la première aile 2c du doigt 2 afin de limiter l'introduction de boue et de poussière depuis l'extérieur vers l'intérieur de la cavité.

De manière préférentielle, dans la position de blocage et dans la position de déblocage, la première aile 3a et éventuellement la deuxième aile 3a du verrou 3 sont en vis-à-vis du corps 1.

Le volume de la cavité est plus important lorsque le doigt 2 est dans la position de fermeture que dans la position d'ouverture. Le volume de la cavité est plus important lorsque le verrou 3 est dans la position de blocage que dans la position de déblocage.

De manière à protéger les ressorts **4,** il est avantageux d'installer chaque ressort 4 dans une cavité. La cavité est délimitée d'une part par le corps 1 et d'autre part par une première aile 3a et une deuxième aile 3a.

En utilisant deux ailes du verrou 3 qui s'installent face au corps 1 et qui sont séparées du corps 1 par les ailes du doigt 2, les orifices qui existent entre les ailes 3a et le corps 1 sont plus petits que les orifices de l'art antérieur ce qui rend plus compliqué l'introduction de boue ou poussière dans le mousqueton. Les ressorts 4 sont mieux protégés.

Comme illustré aux figures 3 à 7, le corps 1 définit au moins en partie un premier logement 5 qui reçoit le premier ressort 4. Le premier logement 5 est incurvé. Le premier ressort 4 est incurvé entre ses deux extrémités pour suivre la courbure du premier logement 5. Dans les modes de réalisation illustrés, le premier logement 5 est formé en partie par le corps 1 et en partie par le verrou 3. De manière préférentielle, le corps 1 définit une première rainure qui forme au moins en partie le logement recevant le premier ressort 4. **Il** est avantageux d'avoir une deuxième rainure formant au moins en partie le logement recevant le deuxième ressort 4.

Afin de faciliter l'actionnement du verrou 3 préalablement à l'actionnement du doigt 2 pour obtenir l'ouverture du doigt 2, il est particulièrement avantageux d'avoir un premier ressort 4 qui est incurvé entre ses deux extrémités 4a/4b. Dans la position de fermeture, le premier ressort 4 définit un arc de cercle avec un rayon de courbure constant ou plusieurs rayons de courbure différents entre les deux extrémités.

Dans la position de fermeture, le premier ressort 4 présente une première valeur moyenne de rayon de courbure, le long de l'arc de cercle qui s'étend de la première extrémité 4a à la deuxième extrémité 4b. Dans la position d'ouverture, le premier ressort 4 présente une deuxième valeur moyenne de rayon de courbure, le long de l'arc de cercle qui s'étend de la première extrémité 4a à la deuxième extrémité 4b. La deuxième valeur de rayon de courbure est différente de la première valeur de rayon de courbure. Préférentiellement, la première valeur est inférieure à la deuxième valeur.

Il est également avantageux que le rayon de courbure moyen défini par le premier ressort 4 lorsque le verrou 3 est dans la position de blocage et que le doigt 2 est dans la position de fermeture soit différent du rayon de courbure moyen défini par le premier ressort 4 lorsque le verrou 3 est dans la position de déblocage et que le doigt 2 est dans la position d'ouverture, par exemple d'ouverture totale. La variation du rayon de courbure permet de modifier le comportement mécanique du premier ressort 4.

La première extrémité 4a du premier ressort 4 est liée fonctionnellement au doigt 2. La première extrémité 4a du premier ressort 4 se déplace lorsque le doigt 2 se déplace. La deuxième extrémité 4b du premier ressort 4 est liée fonctionnellement au verrou 3. La deuxième extrémité 4b du premier ressort 4 se déplace lorsque le verrou 3 se déplace. L'effort fourni par le premier ressort 4 plaque la première extrémité 4a contre le doigt 2 et la deuxième extrémité 4b contre le verrou 3. De manière préférentielle, la distance de déplacement de la deuxième extrémité 4b du premier ressort 4 entre le verrou 3 dans la position de déblocage et le verrou 3 dans la position de blocage est inférieure à la distance de déplacement de la première extrémité 4a du premier ressort 4 entre le doigt 2 dans la position de fermeture et le doigt 2 dans la position d'ouverture totale.

Dans un mode de réalisation avantageux illustré aux figures 3 à 7, le rayon de courbure d'une première portion du premier ressort 4 est sensiblement rectiligne au moyen d'un guide alors que la deuxième portion du premier ressort 4 est incurvée. Le guide impose la forme de la première extrémité 4a du premier ressort 4. Le guide est mobile par rapport au corps 1 et il est avantageux que le guide forme l'interface de contact entre la première extrémité 4a et le doigt 2. L'utilisation d'un guide qui impose une forme au premier ressort 4 permet de modifier la forme libre incurvée ou rectiligne.

Dans une configuration avantageuse illustrée aux figures 3 à 7, le doigt 2 est monté à pivotement autour d'un premier arbre de pivotement 7 fixé au corps 1. L'extrémité 2a du doigt 2 opposée à l'extrémité fixée au corps 1 se déplace selon un arc de cercle ce qui définit un premier rayon de courbure. De manière arbitraire, le signe du rayon de courbure est défini par l'orientation du vecteur qui s'étend le long d'un rayon depuis le centre de l'arc de cercle accessible. Il est avantageux que le premier ressort 4 soit incurvé avec un rayon de courbure de signe opposé au rayon de courbure représenté par le déplacement de l'extrémité 2a. En d'autres termes, l'extrémité mobile du doigt 2 et le premier ressort 4 présente des courbures opposées, l'une est concave et l'autre est convexe selon que l'on observe les courbures d'une extrémité ou de l'autre du corps selon l'axe BB représenté à la figure 1.

Avantageusement, le verrou 3 est monté à pivotement par rapport au corps 1. Le verrou 3 est monté à pivotement par rapport à un deuxième arbre de pivotement 8 qui est fixé au corps 1. L'extrémité mobile la plus éloignée par rapport au deuxième arbre de pivotement 8 définit un arc de cercle. Le premier ressort 4 est incurvé avec un rayon de courbure de signe opposé au rayon de courbure du verrou 3.

De manière préférentielle, le doigt 2 possède un point d'application de l'effort sur le premier ressort 4 qui est éloigné de l'axe de pivotement du doigt 2 d'une première distance. Le verrou 3 possède un point d'application de l'effort sur le premier ressort 4 qui est éloigné de l'axe de pivotement du verrou 3 d'une deuxième distance. La deuxième distance est inférieure à la première distance. Préférentiellement, le doigt 2 possède un point d'application de l'effort sur le premier ressort 4 qui est disposé entre l'extrémité 2a et l'axe de pivotement du doigt 2. Avantageusement, le verrou 3 possède un point d'application de l'effort sur le premier ressort 4 qui est disposé entre la zone d'actionnement du verrou 3 et l'axe de pivotement du verrou 3.

En éloignant le point d'application de l'effort du doigt par rapport au verrou 3, une plus grande longueur de premier ressort 4 est utilisée ce qui permet d'avoir un verrou 3 plus facile à déplacer que le doigt 2. En d'autres termes, le doigt 2 présente une raideur apparente plus importante ce qui permet d'avoir plus rapidement un retour dans la position de fermeture.

De manière préférentielle, l'axe qui relie le premier axe de pivotement et le deuxième axe de pivotement 8 est disposé d'un côté du premier ressort **4,** il ne traverse pas le premier ressort 4.

Dans un mode de réalisation particulier, le doigt 2 est monté à pivotement autour du premier axe de pivotement défini par le premier arbre de pivotement 7. La première extrémité 4a du premier ressort 4 est terminée par une tête 6 montée à pivotement autour d'un troisième axe de pivotement défini qui est parallèle au premier axe de pivotement 8. Préférentiellement, le déplacement de l'extrémité 2a du doigt 2 opposée au premier arbre de pivotement 7 depuis la position de fermeture jusqu'à la position d'ouverture se traduit par un rapprochement de l'extrémité 2b par rapport à la portion centrale 1c du corps 1. Avantageusement, l'extrémité 3c opposée au deuxième arbre de rotation 8 se rapproche du doigt 2 lorsque le verrou 3 se déplace depuis la position de blocage jusqu'à la position de déblocage.

Lorsque le doigt 2 pivote autour du premier arbre de pivotement 7 de manière à basculer entre la position de fermeture et la position d'ouverture, la première extrémité 4a du premier ressort 4 se déplace le long du premier logement 5. En plus de se déplacer le long du premier logement 5, la tête 6 pivote contre le doigt 2. Le pivotement de la tête 6 par rapport au doigt 2 permet d'avoir un comportement mécanique du premier ressort 4 qui est dépourvu d'une composante de flexion avec un effort qui est plus proche d'un effort de compression selon l'axe longitudinal du premier ressort 4 au lieu de combiner un effort de compression et un effort en flexion.

De manière préférentielle, le mousqueton est muni d'une tête 6 qui réalise la connexion entre la première extrémité 4a du premier ressort 4 et le doigt 2. Lorsque le premier ressort 4 est à spires non-jointives, il est avantageux que la tête 6 définisse un trou recevant plusieurs spires de la première extrémité 4a du premier ressort 4. **Il** est également avantageux que le verrou 3 possède un téton qui se fixe au premier ressort **4,** par exemple un téton qui s'insère dans les spires du premier ressort 4. L'extrémité 3c peut former le téton.

**Il** est avantageux que la tête 6 forme également le guide de sorte que la tête 6 impose la courbure de la partie de la première extrémité 4a du premier ressort 4 disposée dans la tête 6. Lorsque la tête 6 se déplace le long du premier logement 5, la courbure de cette partie du premier ressort 4 n'évolue pas. Lorsque la tête 6 se rapproche du verrou 3, des spires du premier ressort 4 peuvent s'introduire dans la tête 6. A l'inverse, lorsque la tête 6 s'éloigne du verrou 3, des spires du premier ressort 4 peuvent quitter la tête 6. Les spires disposées dans la tête 6 sont bloquées pour empêcher la flexion des spires entre elles. Un effort en flexion peut néanmoins apparaitre pour les spires se situant hors de la tête 6. La flexion est observée perpendiculairement à la direction longitudinale du premier ressort 4.

Lorsque le doigt 2 se déplace entre la position d'ouverture et la position de fermeture, la tête 6 se déplace le long du premier logement 5. La tête 6 peut glisser le long du premier logement 5 et elle suit la courbure imposée par le premier logement 5. L'orientation de la tête peut être définie par sa position le long du premier logement 5. La position de la tête 6 dans le premier logement 5 est définie par la position du doigt 2 de sorte que la position de la tête 6 dans le premier logement 5 représente l'intensité de l'effort appliqué sur le doigt 2. En définissant la forme de la courbure du premier logement 5 ou des différentes courbures du premier logement 5, il est possible de définir le comportement du premier ressort 4 en fonction de l'effort appliqué.

Lorsque le verrou 3 est sollicitée entre la position de blocage et la position de déblocage, la tête 6 est en appui contre le doigt 2. Le fonctionnement du premier ressort 4 évolue peu ou est indépendant de la courbure du premier logement 5. Lorsque le doigt 2 se déplace, le verrou 3 est dans la position de déblocage et la deuxième extrémité 4b fixée au verrou 3 est fixe ou quasiment fixe par rapport au corps 1. La variation de courbure le long du premier logement 5 avec les éventuelles variations successives de courbure permet de moduler le comportement mécanique du premier ressort 4.

De manière avantageuse, dans la position d'ouverture, la tête 6 est en appui contre une butée de fin de course. De manière avantageuse, dans la position d'ouverture du doigt 2 et dans la position de déblocage du verrou 3, le premier ressort 4 est rectiligne entre sa première extrémité 4a et sa deuxième extrémité 4b.

Dans un mode de réalisation privilégié, le doigt 2 est monté à pivotement par rapport au corps 1 et le verrou 3 est monté à pivotement par rapport au corps 1. La première extrémité 4a prend appui sur le doigt 2 à une première distance par rapport au premier axe de pivotement et la deuxième extrémité 4b prend appui sur le verrou 3 à une deuxième distance par rapport au deuxième axe de pivotement 8. La deuxième distance inférieure à la première distance de manière à faciliter l'obtention d'un comportement différent entre une sollicitation par le verrou 3 et une sollicitation par le doigt 2.

Pour obtenir une différence de comportement, il est possible d'utiliser un premier ressort 4 qui est un ressort hélicoïdal à spires non-jointives et dont les spires sont différentes entre la première extrémité 4a et la deuxième extrémité 4b, par exemple des matériaux différents ou des écartements différents entre les spires. Les modes de réalisation ci-dessus permettent d'avoir des comportements différents mêmes lorsque le premier ressort 4 est un ressort hélicoïdal à spires non-jointives dont les spires sont identiques d'une extrémité à l'autre.

Dans un mode de réalisation préférentiel, le mousqueton possède un premier ressort 4 et un deuxième ressort 4 qui sont séparés par le corps 1 selon une direction qui est parallèle à l'axe de pivotement du doigt 2. Les deux ressorts sont configurés pour travailler conjointement. Ils sont chacun fixés fonctionnellement au doigt 2 et au verrou 3.

De manière préférentielle, le premier ressort 4 et le deuxième ressort 4 sont fixés à une même tête 6. Le corps 1 définit une lumière, c'est-à-dire un trou traversant. La tête 6 passe à travers le corps 1 et les deux ressorts 4 sont fixés à la tête 6 de part et d'autre du corps 1.

Dans un mode de réalisation préférentiel, une tige 9 est fixée au verrou 3 et circule à l'intérieur d'une glissière 10 définie par le corps 1 ou par le doigt 2. Dans le mode de réalisation illustré, la glissière 10 est définie par le doigt 2. Lorsque le doigt 2 se déplace de la position de fermeture à la position d'ouverture, la glissière 10 glisse par rapport à la tige 9. Lorsque le verrou se déplace entre la position de blocage et la position de déblocage, la tige 9 se déplace par rapport au corps 1 et par rapport à la glissière 10.

A titre d'exemple, la glissière 10 se présente sous la forme générale d'un L. Dans la position de blocage, la tige 9 est sur une branche du L ce qui empêche le déplacement du doigt 2. Lors du passage de la position de blocage à la position de déblocage, la tige 9 quitte une branche du L pour atteindre une autre branche du L qui autorise le déplacement du doigt 2. Lorsque le doigt 2 se déplace par pivotement, la branche est sous la forme d'un arc de cercle.

Dans une configuration particulière, la glissière 10 est définie dans la première aile 3a et dans la deuxième aile 3a le cas échéant. **Il** est préférable que la glissière 10 débouche dans le trou traversant délimité par le doigt 2 et le corps 1. De manière préférentielle, la tige 9 présente une section complémentaire ou sensiblement complémentaire à la section de la glissière 10. En utilisant une section complémentaire, on limite l'introduction de poussière et de boue à travers la glissière 10. Préférentiellement, la tige 9 est en appui contre le corps 1 lorsque le verrou 3 est dans la position de déblocage ce qui permet de limiter le transit de la boue et des poussières vers la cavité.

**Il** est particulièrement avantageux que, dans la position de fermeture, la glissière 10 soit disposée majoritairement à l'intérieur d'un anneau délimité par le corps 1 et la partie du doigt 2 qui relie la première extrémité 2a et la deuxième extrémité 2b lorsque l'on observe le mousqueton selon une direction parallèle au premier axe de pivotement.

De manière préférentielle, la deuxième extrémité 2b du doigt 2 est pleine et définit un trou débouchant recevant la deuxième extrémité 1b du corps 1 dans la position de fermeture.

Il est particulièrement avantageux d'utiliser un tel mousqueton dans une longe. Un élément filaire est fixé de manière démontable ou indémontable au mousqueton. Le corps peut définir un passage traversant et l'élément filaire fait le tour du passage traversant. L'élément filaire peut être un élément filaire statique, ou un élément filaire dynamique. Un élément filaire dynamique possède une capacité d'allongement supérieure à 6%, par exemple comprise entre 8% et 20%. Un élément filaire statique possède une capacité d'allongement inférieure à 4%.

De manière préférentielle, le mousqueton appartient à une longe de via-ferrata qui comporte un absorbeur d'énergie en cas de chute.

## Revendications

1. Mousqueton verrouillable pour l'alpinisme et les travaux en hauteur comportant :
- un corps (1) en forme de « C » muni d'une première portion d'extrémité (1a) et d'une deuxième portion d'extrémité (1b) reliées par une portion centrale (1c) ;
- un doigt (2) ayant une première extrémité (2a) et une deuxième extrémité (2b), la première extrémité (2a) du doigt (2) étant fixée à la première portion d'extrémité (1a) du corps (1), le doigt (2) étant monté à pivotement entre une position de fermeture et une position d'ouverture, la deuxième extrémité (2b) du doigt (2) se déplaçant par rapport à la deuxième portion d'extrémité (1b) du corps (1) lorsque le doigt (2) se déplace entre la position d'ouverture et la position de fermeture, le doigt (2) et le corps (1) définissant un anneau lorsque le doigt (2) est dans la position de fermeture ;
- un verrou (3) fixé au corps (1) et monté mobile entre une position de blocage et une position de déblocage, la position de blocage bloquant le doigt (2) dans la position de fermeture, la position de déblocage autorisant un déplacement du doigt (2) entre la position de fermeture et la position d'ouverture ;
**caractérisé par** :
- un premier ressort (4) et un deuxième ressort (4) ayant chacun une première extrémité (4a) reliée au doigt (2) et une deuxième extrémité (4b) reliée au verrou (3), le premier ressort (4) et le deuxième ressort (4) sollicitant chacun le doigt (2) pour qu'une position de repos du doigt (2) soit la position de fermeture et sollicitant le verrou (3) pour qu'une position de repos du verrou (3) soit la position de blocage, le premier ressort (4) et le deuxième ressort (4) étant dépourvus de point de fixation direct avec le corps (1) ;
dans lequel le premier ressort (4) et le deuxième ressort (4) sont séparés par le corps (1).

2. Mousqueton verrouillable selon la revendication 1 dans lequel le premier ressort (4) et le deuxième ressort (4) possèdent la même longueur et la même raideur.

3. Mousqueton verrouillable selon l'une des revendications 1 et 2 dans lequel le doigt (2) possède une première aile (2c) et une deuxième aile (2c), le corps (1) étant disposé entre la première aile (2c) et la deuxième aile (2c) dans la position d'ouverture et dans la position de fermeture.

4. Mousqueton verrouillable selon la revendication 3 dans lequel la première aile (2c) et la deuxième aile (2c) du doigt (2) présentent une surface de recouvrement avec le corps (1) qui est plus importante dans la position d'ouverture que dans la position de fermeture, la surface de recouvrement étant observée selon une direction parallèle à l'axe de pivotement du doigt (2).

5. Mousqueton verrouillable selon l'une des revendications 3 et 4 dans lequel la première aile (2c) et la deuxième aile (2c) glissent contre le corps (1).

6. Mousqueton verrouillable selon l'une quelconque des revendications 1 à 5 dans lequel le verrou (3) se présente sous la forme d'un « U » comportant deux ailes (3a) reliées par une paroi de liaison (3b), le verrou (3) et le corps (1) définissant une cavité recevant le premier ressort (4) et le deuxième ressort (4).

7. Mousqueton verrouillable selon la revendication 6 lorsqu'elle dépend de la revendication 3 dans lequel la première aile (2c) du doigt (2) est disposée entre le corps (1) et la première aile (3a) du verrou (3) et dans lequel la deuxième aile (2c) du doigt (2) est disposée entre le corps (1) et la deuxième aile (3a) du verrou (3).

8. Mousqueton verrouillable selon la revendication 7 dans lequel la cavité recevant le premier ressort (4) et le deuxième ressort (4) est délimitée par la première aile (2c) et la deuxième aile (2c) du doigt (2), la première aile (3a) du verrou (3) glissant contre la première aile (2c) du doigt (2) et la deuxième aile (3a) du verrou (3) glissant contre la deuxième aile (2c) du doigt (2).

9. Mousqueton verrouillable selon l'une quelconque des revendications 6 à 8 dans lequel dans la position de déblocage, la paroi de liaison (3b) est en appui contre le corps (1).

10. Mousqueton verrouillable selon l'une des revendications 1 à 9 dans lequel le doigt (2) est monté à pivotement autour d'un premier axe de pivotement et la première extrémité (4a) du premier ressort (4) est terminée par une tête (6) montée à pivotement autour d'un axe de pivotement qui est parallèle au premier axe de pivotement.

11. Mousqueton verrouillable selon la revendication 10 dans lequel le premier ressort (4) est un ressort hélicoïdal à spires non jointives et dans lequel quelques spires de la première extrémité (4) sont bloquées par la tête (6) pour empêcher une flexion desdites quelques spires.

12. Mousqueton verrouillable selon l'une quelconque des revendications 10 et 11 dans lequel dans la position d'ouverture, la tête (6) est contre une butée de fin de course définie par le corps (1).

13. Mousqueton verrouillable selon l'une quelconque des revendications 10 à 12 dans lequel le corps (1) définit une lumière et la tête (6) s'étend de part et d'autre du corps (1) à travers la lumière pour recevoir la première extrémité (4a) du premier ressort (4) et la première extrémité (4a) du deuxième ressort (4).

14. Mousqueton verrouillable selon l'une des revendications 1 à 13 dans lequel le doigt (2) est monté à pivotement par rapport au corps (1) autour d'un premier arbre de pivotement (7) et le verrou (3) est monté à pivotement par rapport au corps (1) autour du deuxième arbre de pivotement (8) et dans lequel, pour chacun du premier ressort (4) et du deuxième ressort (4), la première extrémité (4a) prend appui sur le doigt (2) à une première distance du premier arbre de pivotement (7) et la deuxième extrémité (4b) prend appui sur le verrou (3) à une deuxième distance du deuxième arbre de pivotement (8), la deuxième distance étant inférieure à la première distance et dans lequel un axe reliant le premier arbre de pivotement (7) et le deuxième arbre de pivotement (8) est disposé intégralement d'un seul côté d'un plan passant par le premier ressort (4) et le deuxième ressort (4).

15. Mousqueton verrouillable selon l'une quelconque des revendications 1 à 14 dans lequel le doigt (2) définit une glissière (10), la glissière (10) étant montée à pivotement par rapport au corps (1) lorsque le doigt (2) se déplace entre la position de fermeture et la position d'ouverture et dans lequel le verrou (3) possède une tige (9), la tige (9) étant montée mobile par rapport au corps (1) et par rapport à la glissière (10) lorsque le verrou (3) se déplace entre la position de blocage et la position de déblocage, la glissière (10) étant disposée du même côté de la portion centrale (1c) que la deuxième extrémité (2b) du doigt (2) dans une observation selon une direction parallèle à l'axe de pivotement du doigt (2).

16. Procédé d'ouverture d'un mousqueton comportant les étapes suivantes :
- fournir un mousqueton selon l'une quelconque des revendications précédentes ;
- déplacer le verrou (3) de la position de blocage à la position de déblocage ;
- déplacer le doigt (2) de la position de fermeture à la position d'ouverture.

## Patentansprüche

1. Verriegelbarer Karabinerhaken für Bergsteiger und Höhenarbeiten, umfassend:
- einen "C"-förmigen Körper (1), der mit einem ersten Endabschnitt (1a) und einem zweiten Endabschnitt (1b) versehen ist, die durch einen Mittelabschnitt (1c) verbunden sind;
- einen Finger (2) mit einem ersten Ende (2a) und einem zweiten Ende (2b), wobei das erste Ende (2a) des Fingers (2) am ersten Endabschnitt (1a) des Körpers (1) befestigt ist und der Finger (2) zwischen einer Schließposition und einer Öffnungsposition schwenkbar angebracht ist, wobei das zweite Ende (2b) des Fingers (2) sich relativ zum zweiten Endabschnitt (1b) des Körpers (1) bewegt, wenn der Finger (2) sich zwischen der Öffnungsposition und der Schließposition bewegt, wobei der Finger (2) und der Körper (1) einen Ring definieren, wenn der Finger (2) sich in der Schließposition befindet;
- einen Riegel (3), der am Körper (1) befestigt ist und zwischen einer Blockierstellung und einer Freigabestellung beweglich angebracht ist, wobei die Blockierstellung den Finger (2) in der Schließposition blockiert und die Freigabestellung eine Bewegung des Fingers (2) zwischen der Schließposition und der Öffnungsposition zulässt;
**gekennzeichnet durch**:
- eine erste Feder (4) und eine zweite Feder (4), die jeweils ein mit dem Finger (2) verbundenes erstes Ende (4a) und ein mit dem Riegel (3) verbundenes zweites Ende (4b) aufweisen, wobei die erste Feder (4) und die zweite Feder (4) jeweils den Finger (2) so vorspannen, dass eine Ruheposition des Fingers (2) die Schließposition ist, und den Riegel (3) so vorspannen, dass eine Ruheposition des Riegels (3) die Blockierstellung ist, wobei die erste Feder (4) und die zweite Feder (4) keinen direkten Befestigungspunkt am Körper (1) haben;
wobei die erste Feder (4) und die zweite Feder (4) durch den Körper (1) getrennt sind.

2. Verriegelbarer Karabinerhaken nach Anspruch 1, wobei die erste Feder (4) und die zweite Feder (4) die gleiche Länge und die gleiche Steifigkeit aufweisen.

3. Verriegelbarer Karabinerhaken nach einem der Ansprüche 1 und 2, wobei der Finger (2) einen ersten Flügel (2c) und einen zweiten Flügel (2c) aufweist, wobei der Körper (1) zwischen dem ersten Flügel (2c) und dem zweiten Flügel (2c) in der Öffnungsposition und in der Schließposition angeordnet ist.

4. Verriegelbarer Karabinerhaken nach Anspruch 3, wobei der erste Flügel (2c) und der zweite Flügel (2c) des Fingers (2) mit dem Körper (1) eine Überdeckungsfläche aufweisen, die in der Öffnungsposition größer ist als in der Schließposition, wobei die Überdeckungsfläche in einer Richtung parallel zur Drehachse des Fingers (2) gesehen wird.

5. Verriegelbarer Karabinerhaken nach einem der Ansprüche 3 und 4, wobei der erste Flügel (2c) und der zweite Flügel (2c) gegen den Körper (1) gleiten.

6. Verriegelbarer Karabinerhaken nach einem der Ansprüche 1 bis 5, wobei der Riegel (3) in Form eines "U" vorliegt, das zwei Flügel (3a) aufweist, die durch eine Verbindungswand (3b) verbunden sind, wobei der Riegel (3) und der Körper (1) einen Hohlraum definieren, der die erste Feder (4) und die zweite Feder (4) aufnimmt.

7. Verriegelbarer Karabinerhaken nach Anspruch 6, wenn er von Anspruch 3 abhängig ist, wobei der erste Flügel (2c) des Fingers (2) zwischen dem Körper (1) und dem ersten Flügel (3a) des Riegels (3) angeordnet ist, und wobei der zweite Flügel (2c) des Fingers (2) zwischen dem Körper (1) und dem zweiten Flügel (3a) des Riegels (3) angeordnet ist.

8. Verriegelbarer Karabinerhaken nach Anspruch 7, wobei der Hohlraum, der die erste Feder (4) und die zweite Feder (4) aufnimmt, durch den ersten Flügel (2c) und den zweiten Flügel (2c) des Fingers (2) begrenzt wird, wobei der erste Flügel (3a) des Riegels (3) gegen den ersten Flügel (2c) des Fingers (2) gleitet und der zweite Flügel (3a) des Riegels (3) gegen den zweiten Flügel (2c) des Fingers (2) gleitet.

9. Verriegelbarer Karabinerhaken nach einem der Ansprüche 6 bis 8, wobei in der Freigabestellung die Verbindungswand (3b) gegen den Körper (1) anliegt.

10. Verriegelbarer Karabinerhaken nach einem der Ansprüche 1 bis 9, wobei der Finger (2) um eine erste Drehachse schwenkbar angebracht ist und das erste Ende (4a) der ersten Feder (4) durch einen Kopf (6) abgeschlossen wird, der um eine Drehachse schwenkbar angebracht ist, die parallel zur ersten Drehachse ist.

11. Verriegelbarer Karabinerhaken nach Anspruch 10, wobei die erste Feder (4) eine Schraubenfeder ist, deren Windungen einander nicht berühren, und wobei einige Windungen des ersten Endes (4a) durch den Kopf (6) blockiert werden, um eine Biegung dieser einigen Windungen zu verhindern.

12. Verriegelbarer Karabinerhaken nach einem der Ansprüche 10 und 11, wobei in der Öffnungsposition der Kopf (6) gegen einen durch den Körper (1) definierten Endanschlag anliegt.

13. Verriegelbarer Karabinerhaken nach einem der Ansprüche 10 bis 12, wobei der Körper (1) einen Schlitz definiert und der Kopf (6) sich beiderseits des Körpers (1) durch den Schlitz hindurch erstreckt, um das erste Ende (4a) der ersten Feder (4) und das erste Ende (4a) der zweiten Feder (4) aufzunehmen.

14. Verriegelbarer Karabinerhaken nach einem der Ansprüche 1 bis 13, wobei der Finger (2) in Bezug auf den Körper (1) um eine erste Drehwelle (7) schwenkbar angebracht ist und der Riegel (3) in Bezug auf den Körper (1) um die zweite Drehwelle (8) schwenkbar angebracht ist, und wobei für jede von der ersten Feder (4) und der zweiten Feder (4) das erste Ende (4a) in einem ersten Abstand von der ersten Drehwelle (7) auf dem Finger (2) zur Auflage kommt und das zweite Ende (4b) in einem zweiten Abstand von der zweiten Drehwelle (8) auf dem Riegel (3) zur Auflage kommt, wobei der zweite Abstand kleiner ist als der erste Abstand, und wobei eine Achse, die die erste Drehwelle (7) und die zweite Drehwelle (8) verbindet, vollständig auf einer einzigen Seite einer Ebene angeordnet ist, die durch die erste Feder (4) und die zweite Feder (4) geht.

15. Verriegelbarer Karabinerhaken nach einem der Ansprüche 1 bis 14, wobei der Finger (2) eine Gleitführung (10) definiert, wobei die Gleitführung (10) in Bezug auf den Körper (1) schwenkbar angebracht ist, wenn der Finger (2) sich zwischen der Schließposition und der Öffnungsposition bewegt, und wobei der Riegel (3) einen Stift (9) aufweist, wobei der Stift (9) relativ zum Körper (1) und relativ zur Gleitführung (10) beweglich angebracht ist, wenn der Riegel (3) sich zwischen der Blockierstellung und der Freigabestellung bewegt, wobei die Gleitführung (10) in einer Richtung parallel zur Drehachse des Fingers (2) gesehen auf derselben Seite des Mittelabschnitts (1c) angeordnet ist wie das zweite Ende (2b) des Fingers (2).

16. Verfahren zum Öffnen eines Karabinerhakens, umfassend die folgenden Schritte:
- Bereitstellen eines Karabinerhakens nach einem der vorherigen Ansprüche;
- Bewegen des Riegels (3) aus der Blockierstellung in die Freigabestellung;
- Bewegen des Fingers (2) aus der Schließposition in die Öffnungsposition.

## Claims

1. Lockable carabiner for mountaineering and work at heights comprising:
- a C-shaped body (1) provided with a first end portion (1a) and a second end portion (1b) connected by a central portion (1c);
- a gate (2) having a first end (2a) and a second end (2b), the first end (2a) of the gate (2) being fixed to the first end portion (1a) of the body (1), the gate (2) being arranged swivelling between a closed position and an open position, the second end (2b) of the gate (2) moving with respect to the second end portion (1b) of the body (1) when the gate (2) moves between the open position and the closed position, the gate (2) and body (1) defining a ring when the gate (2) is in the closed position;
- a catch (3) fixed to the body (1) and fitted movable between a blocking position and a release position, the blocking position blocking the gate (2) in the closed position, the release position allowing movement of the gate (2) between the closed position and the open position;
- a first spring (4) and a second spring (4) each having a first end (4a) connected to the gate (2) and a second end (4b) connected to the catch (3), the first spring (4) and second spring (4) each biasing the gate (2) so that a rest position of the gate (2) is the closed position and biasing the catch (3) so that a rest position of the catch (3) is the blocking position, the first spring (4) and second spring (4) being devoid of direct attachment point with the body (1);
wherein the first spring (4) and second spring (4) are separated by the body (1).

2. Lockable carabiner according to claim 1 wherein the first spring (4) and second spring (4) have the same length and the same stiffness.

3. Lockable carabiner according to one of claims 1 and 2 wherein the gate (2) has a first wing (2c) and a second wing (2c), the body (1) being arranged between the first wing (2c) and second wing (2c) in the open position and in the closed position.

4. Lockable carabiner according to claim 3 wherein the first wing (2c) and second wing (2c) of the gate (2) present a coverage surface with the body (1) that is larger in the open position than in the closed position, the coverage surface being observed in a direction parallel to the swivel axis of the gate (2).

5. Lockable carabiner according to one of claims 3 and 4 wherein the first wing (2c) and the second wing (2c) slide against the body (1).

6. Lockable carabiner according to anyone of claims 1 to 5 wherein the catch (3) is U-shaped comprising two wings (3a) connected by a joining wall (3b), the catch (3) and body (1) defining a cavity receiving the first spring (4) and the second spring (4).

7. Lockable carabiner according to claim 6 when depending from claim 3 wherein the first wing (2c) of the gate (2) is arranged between the body (1) and the first wing (3a) of the catch (3) and wherein the second wing (2c) of the gate (2) is arranged between the body (1) and the second wing (3a) of the catch (3).

8. Lockable carabiner according to claim 7 wherein the cavity receiving the first spring (4) and the second spring (4) is delineated by the first wing (2c) and the second wing (2c) of the gate (2), the first wing (3a) of the catch (3) sliding against the first wing (2c) of the gate (2) and the second wing (3a) of the catch (3) sliding against the second wing (2c) of the gate (2).

9. Lockable carabiner according to anyone of claims 6 to 8 wherein, in the release position, the joining wall (3b) is pressing against the body (1).

10. Lockable carabiner according to anyone of claims 1 to 9 wherein the gate (2) is arranged swivelling around a first swivel axis and the first end (4a) of the first spring (4) is terminated by a head (6) arranged swivelling around a swivel axis that is parallel to the first swivel axis.

11. Lockable carabiner according to claim 10 wherein the first spring (4) is a coil spring with non-contiguous turns and wherein a few turns of the first end (4) are blocked by the head (6) to prevent a flexion of said a few turns.

12. Lockable carabiner according to anyone of claims 10 and 11 wherein, in the open position, the head (6) is up against an end-of-travel stop defined by the body (1).

13. Lockable carabiner according to anyone of claims 10 to 12 wherein the body (1) defines an aperture and the head (6) extends on each side of the body (1) through the aperture to receive the first end (4a) of the first spring (4) and the first end (4a) of the second spring (4).

14. Lockable carabiner according to anyone of claims 1 to 13 wherein the gate (2) is arranged swivelling with respect to the body (1) around a first pivot shaft (7) and the catch (3) is arranged swivelling with respect to the body (1) around a second pivot shaft (8) and wherein, for each of the first spring (4) and the second spring (4), the first end (4a) presses on the gate (2) at a first distance from the first pivot shaft (7) and the second end presses on the catch (3) at a second distance from the second pivot shaft, the second distance being smaller than the first distance, and wherein an axis connecting the first pivot shaft (7) and the second pivot shaft (8) is arranged totally on one side of a plane passing through the first spring (4) and the second spring (4).

15. Lockable carabiner according to anyone of claims 1 to 14 wherein the gate (2) defines a slide (10), the slide (10) being installed swivelling with respect to the body (1) when the gate (2) moves between the closed position and the open position, and wherein the catch (3) has a rod (9), the rod (9) being installed movable with respect to the body (1) and with respect to the slide (10) when the catch (3) moves between the blocking position and the release position, the slide (10) being arranged on the same side of the central portion (2c) as the second end of the gate (2) in an observation in a direction parallel to the swivel axis of the gate (2).

16. Method for opening a carabiner comprising the following steps:
- providing a carabiner according to any one of the preceding claims;
- moving the catch (3) from the blocking position to the released position;
- moving the gate (2) from the closed position to the open position.
